# DEMANDE DE BREVET EUROPEEN

(11) **EP 2 194 680 A1**
(43) Date de publication de la demande: **09.06.2010**
(21) Numéro de dépôt: 09177789.6
(22) Date de dépôt: 02.12.2009
(51) Int. Cl.: H04L 12/58, H04W 24/08

(54) **Procédé de détermination d'un état de connectivité d'un terminal mobile**

(30) Priorité: 02.12.2008 FR 0858194
(71) Demandeur: Quescom, 06560 Valbonne (FR)
(72) Inventeur: Oros, Philippe, 06250, MOUGINS (FR); Madenian, Marc, 91190, GIF SUR YVETTE (FR)
(74) Mandataire: Bentz, Jean-Paul

(57) **Abrégé**

L'invention concerne un procédé de détermination d'un état de connectivité d'au moins un terminal mobile (5) abonné à au moins un réseau de téléphonie mobile (1) par un serveur de communication (3) auprès duquel le terminal mobile et son réseau d'abonnement sont identifiés, **caractérisé en ce qu**'il comprend :
- l'émission (11) d'un message court SMS (SMS(A,P)) avec accusé de réception automatique depuis le serveur de communication vers le terminal mobile, et
- la détermination de l'état de connectivité du terminal mobile (5) au réseau par le serveur de communication, en fonction de la réception ou non de l'accusé de réception automatique (Ack_SMS) du message court SMS par le serveur de communication au terme d'une première temporisation (T) de valeur paramétrable au niveau du serveur de communication.

## Description

La présente invention se rapporte à un procédé de détermination d'un état de connectivité d'un terminal mobile à un réseau de téléphonie mobile par un serveur de communication auprès duquel le terminal mobile et son réseau d'abonnement sont identifiés.

Dans le contexte de la présente invention, un serveur de communication est un équipement distinct du réseau de téléphonie mobile et regroupe notamment, mais non exclusivement, des équipements de commutation de type PABX, IP-PABX, Centrex, « Call Manager », ou encore des passerelles de communication multi-réseaux (IP, Isdn, GSM 2G, 2,5G, 3G, Wimax, Wifi, LTE).

Ces serveurs de communication, localisés par exemple à l'intérieur d'une entreprise, permettent de gérer de manière automatique les communications téléphoniques entre plusieurs postes téléphoniques, ainsi que d'établir des communications avec l'extérieur.

La profusion des moyens de communication dans le milieu de l'entreprise, en particulier le succès de la téléphonie mobile, se traduisant par un nombre croissant de collaborateurs équipés d'un terminal mobile connecté à un réseau de téléphonie mobile, met de plus en plus en évidence le besoin de gestion de ces terminaux mobiles par les serveurs de communication susmentionnés, de type PABX par exemple.

Ce besoin se concrétise dans le concept de convergence fixe-mobile, auquel les entreprises s'intéressent de plus en plus aujourd'hui, avec l'ambition de pouvoir traiter les terminaux mobiles des collaborateurs comme tous les terminaux, filaires ou radio (par exemple de type DECT ou Wifi), d'entreprise et de donner ainsi accès aux fonctionnalités téléphoniques d'entreprise s'exécutant dans serveurs de communication d'entreprise, depuis les terminaux mobiles : par exemple, la conférence à trois, le transfert d'appel, la messagerie unique, etc.

A cet effet, un usager d'entreprise peut être identifié sous un numéro téléphonique professionnel unique auquel le serveur de communication d'entreprise associe au moins un poste téléphonique fixe de bureau et un terminal mobile d'un réseau de téléphonie mobile.

Dans ce contexte, une définition courante des objectifs recherchés par la convergence fixe-mobile d'entreprise est d'assurer la joignabilité, à un instant donné, d'un usager identifié par un numéro unique, sur le terminal le plus approprié.

A titre d'exemple, une fonctionnalité classiquement mise en oeuvre par les principaux fabricants de PABX/IP-PABX et serveurs équivalents, concerne le service de « dual ring », consistant à alerter simultanément un poste fixe d'entreprise et un terminal mobile lorsqu'un appel incident est présenté à l'entreprise.

Soit un appel incident d'un correspondant extérieur cherchant à joindre un usager d'entreprise connu sous son numéro professionnel unique et disposant d'un poste fixe de bureau et d'un terminal mobile d'un réseau de téléphonie mobile d'un opérateur donné.

Le serveur de communication d'entreprise va simultanément alerter le poste fixe (par exemple : sonnerie) et lancer un appel sur le réseau de l'opérateur de téléphonie mobile concerné pour joindre le terminal mobile.

Si le terminal mobile est hors tension ou hors couverture radio cellulaire, l'appel va en général être dérouté sur la messagerie vocale de l'opérateur de téléphonie mobile.

Cette situation est interprétée, à tort, par le serveur de communication d'entreprise comme une acceptation de l'appel par le terminal mobile. De ce fait, le serveur arrête de faire sonner le poste fixe et connecte involontairement le correspondant extérieur à la messagerie vocale de l'opérateur de téléphonie mobile.

Cette mauvaise analyse de la situation inhibe ainsi de fait toutes les fonctions que le serveur de communication d'entreprise peut assurer comme le renvoi vers un standard téléphonique, un automate vocal ou encore une messagerie vocale d'entreprise.

Il découle donc de l'exemple précédent que la non connaissance au préalable par le serveur de communication d'entreprise de l'état de connectivité du terminal mobile au réseau de téléphonie mobile, constitue une limite importante au déploiement de la convergence fixe-mobile d'entreprise, compromettant son efficacité, voire sa raison d'être.

Afin de pouvoir assurer pleinement son rôle, il apparaît que le logiciel de traitement des appels téléphoniques s'exécutant dans un serveur de communication d'entreprise devrait être en mesure de connaître à tout instant l'état de connectivité au réseau de téléphonie mobile des terminaux mobiles associés à un numéro unique identifiant un usager de l'entreprise.

Or, les états des terminaux de réseau de téléphonie mobile de type GSM, 2G, 2,5G, CDMA, UMTS/3G ainsi que les versions subséquentes spécifiés par 3GPP et 3GPP2, ETSI et ITU-T, en particulier celles correspondant à l'architecture IMS (Internet Multimedia Subsystem) ne sont connus et gérés que par les équipements composant le coeur de réseau tels que le MSC (Mobile Switching Center) et le HLR/HSS (« Home Location Register/Home Subscriber Server »).

Dans la mesure où les serveurs de communication d'entreprise n'ont pas directement accès aux données d'usagers stockées dans ces équipements de coeur de réseau de téléphonie mobile, la connaissance à tout instant de l'état de joignabilité des terminaux mobiles associés à un numéro unique d'usager d'entreprise représente un véritable défi pour les serveurs de communication d'entreprise.

Un but de la présente invention concerne donc l'amélioration des fonctions de la convergence fixe-mobile d'entreprise, en permettant notamment à un serveur de communication d'entreprise de connaître l'état de connectivité d'un terminal mobile à un réseau de téléphonie mobile lorsqu'il en a besoin pour effectuer correctement l'acheminement d'un appel téléphonique susceptible d'impliquer ledit terminal mobile.

Avec cet objectif en vue, l'invention a pour objet un procédé de détermination d'un état de connectivité d'au moins un terminal mobile abonné à au moins un réseau de téléphonie mobile par un serveur de communication auprès duquel le terminal mobile et son réseau d'abonnement sont identifiés, **caractérisé en ce qu'**il comprend :
- l'émission d'un message court SMS avec accusé de réception automatique depuis le serveur de communication vers le terminal mobile, et
- la détermination de l'état de connectivité du terminal mobile au réseau par le serveur de communication, en fonction de la réception ou non de l'accusé de réception automatique du message court SMS par le serveur de communication au terme d'une première temporisation de valeur paramétrable au niveau du serveur de communication.

De préférence, l'état de connectivité déterminé par le serveur de communication est adapté à prendre l'un des états suivants : - joignable si le message d'accusé de réception est reçu avant le terme de la première temporisation, - non joignable si le message d'accusé de réception n'est pas reçu avant le terme de la première temporisation, - supposé joignable, si le message d'accusé de réception est reçu après le terme de la première temporisation et qu'aucune action de traitement d'appel téléphonique concernant le terminal mobile n'est mise en oeuvre par le serveur de communication.

De préférence, la valeur de la première temporisation paramétrée au niveau du serveur de communication est liée à l'opérateur du réseau de téléphonie mobile d'abonnement du terminal mobile identifié auprès du serveur de communication.

Selon un mode de réalisation, la valeur de la première temporisation est attribuée automatiquement par le serveur de communication pour chaque opérateur de téléphonie mobile identifié auprès de lui selon les étapes suivantes consistant à :
- sélectionner une liste de terminaux mobiles identifiés auprès du serveur de communication, abonnés dudit opérateur de téléphonie mobile,
- émettre un message court de test avec accusé de réception automatique depuis le serveur de communication vers chaque terminal mobile de la liste,
- mesurer le temps de retour de l'accusé de réception automatique pour chaque message court de test émis,
- attribuer la valeur de la première temporisation pour ledit opérateur de téléphonie mobile en fonction d'une analyse statistique des résultats de mesure.

Dans une variante, la valeur de la première temporisation est liée en outre à un second opérateur de réseau téléphonie mobile, dit réseau de téléphonie mobile visité, adapté à acheminer des appels vers le terminal mobile lorsque ce dernier se déplace en dehors de la zone couverte par son réseau de téléphonie mobile d'abonnement.

Selon cette variante, la valeur de la première temporisation est attribuée automatiquement par le serveur de communication pour chaque couple d'opérateurs respectivement de réseau de téléphonie mobile d'abonnement et de réseau de téléphonie mobile visité, selon les étapes suivantes consistant à :
- sélectionner au moins un terminal mobile identifié auprès du serveur de communication utilisant le réseau de téléphonie mobile visité,
- émettre une pluralité de messages courts de test avec accusé de réception automatique depuis le serveur de communication vers le terminal mobile sélectionné,
- mesurer le temps de retour de l'accusé de réception automatique pour chaque message court de test émis,
- attribuer la valeur de la première temporisation pour ledit couple d'opérateurs de téléphonie mobile en fonction d'une analyse statistique des résultats de mesure.

Avantageusement, le message court SMS avec accusé de réception automatique émis depuis le serveur de communication vers le terminal mobile comprend des informations d'identification d'un appel téléphonique reçu par le serveur de communication impliquant le terminal mobile.

De préférence, le message court SMS avec accusé de réception automatique émis depuis le serveur de communication vers le terminal mobile comprend des informations d'identification d'une interface de communication du serveur de communication avec le réseau de téléphonie mobile d'abonnement du terminal mobile.

Selon un mode de réalisation, le procédé comprend en outre l'émission de l'appel téléphonique reçu impliquant le terminal mobile sur l'interface de communication du serveur de communication à destination du terminal mobile dès réception de l'accusé de réception automatique du message court SMS par le serveur de communication ou après l'expiration d'une seconde temporisation d'une valeur inférieure à celle de la première temporisation.

De préférence, les informations d'identification de l'appel téléphonique reçu par le serveur de communication impliquant le terminal mobile comprennent un numéro de téléphone et/ou un nom.

Avantageusement, chaque terminal mobile est identifié auprès du serveur de communication par un numéro unique d'appel, auquel le serveur de communication associe au moins le terminal mobile et un poste téléphonique privé.

L'invention concerne également un serveur de communication, **caractérisé en ce qu**'il est adapté à la mise en oeuvre du procédé selon l'invention.

Un tel serveur de communication selon l'invention peut comprendre un équipement de commutation de type PABX, IP-PABX ou centrex ou encore une passerelle de communication multi-réseaux.

D'autres caractéristiques et avantages de la présente invention apparaîtront plus clairement à la lecture de la description suivante donnée à titre d'exemple illustratif et non limitatif et faite en référence à la figure unique annexée illustrant sous la forme d'un organigramme un procédé général selon l'invention de détermination de l'état de connectivité d'un terminal mobile et d'acheminement d'appel jusqu'au terminal mobile.

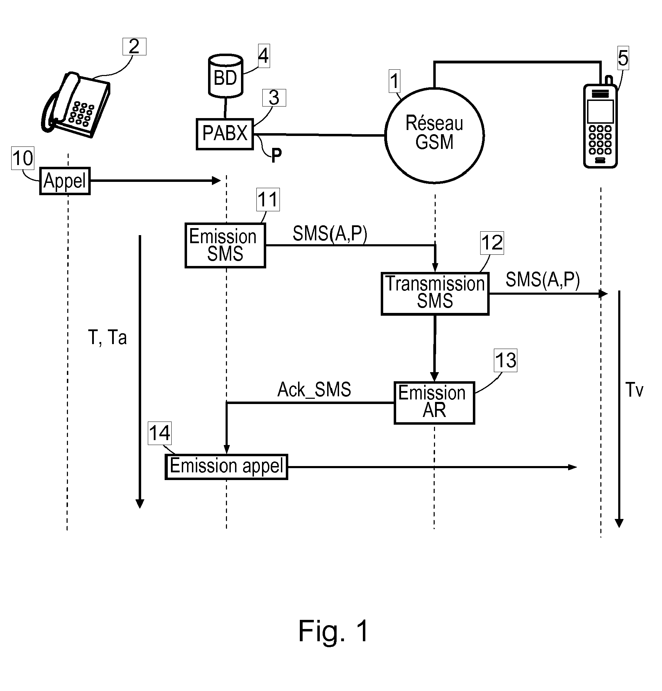

La figure 1 illustre donc un procédé conforme à la présente invention de détermination d'un état de connectivité d'un terminal mobile 5 abonné à un réseau de téléphonie mobile 1, par exemple un réseau GSM, par un serveur de communication 3, localisé par exemple au sein d'une entreprise.

Le terminal mobile 5 d'un usager de l'entreprise peut, d'une manière classique, être identifié auprès du serveur de communication d'entreprise par un numéro unique d'appel (« One Number »), auquel le serveur de communication d'entreprise 3 associe, au moins, le terminal mobile et un poste téléphonique d'entreprise, par exemple un terminal filaire ou radio d'entreprise.

A cet effet, le serveur de communication 3 accède à une base de données 4 spécifiant, pour chaque terminal mobile d'usager identifié auprès de lui, le numéro de téléphone MSISDN (« Mobile Station ISDN Number ») attribué à l'usager du terminal mobile par l'opérateur du réseau de téléphonie mobile d'abonnement, le réseau de téléphonie mobile d'abonnement et le numéro unique d'appel sous lequel est connu cet usager de l'entreprise.

Dans ce contexte, soit un appel 10 émis par un correspondant A depuis un terminal 2, reçu au niveau du serveur de communication d'entreprise 3 et susceptible d'impliquer le terminal mobile 5.

Le procédé proposé par la présente invention vise alors à permettre au serveur de communication d'entreprise 3 de connaître précisément l'état de connectivité du terminal mobile 5 à son réseau de téléphonie mobile d'abonnement, de manière à pouvoir effectuer correctement l'acheminement de l'appel téléphonique susceptible d'impliquer le terminal mobile.

Pour ce faire, supposant que le serveur de communication d'entreprise 3 n'a pas accès aux données d'abonnés du réseau de téléphonie mobile, qui sont classiquement stockées et gérées par le coeur de réseau de l'opérateur (ex : MSC et HLR/HSS), il est attribué au terminal mobile un état de connectivité choisi parmi trois états de connectivité prédéfinis. Ces trois états, gérés à tout instant par le serveur de communication d'entreprise, sont :
- Injoignable (noté I), correspondant à l'état d'un terminal mobile inactif ou hors couverture radio, c'est-à-dire non connecté à une station de base (BTS ou « Base Transceiver Station », NodeB en 3G), assurant la couverture radioélectrique d'une cellule du réseau de téléphonie mobile,
- Supposé joignable (noté SJ), correspondant à l'état d'un terminal mobile dont la joignabilité est considérée a priori comme possible mais non garantie pour autant,
- Joignable (noté J), correspondant à l'état d'un terminal mobile dont la joignabilité est assurée.

Au démarrage du serveur de communication d'entreprise, l'état SJ est affecté par défaut à chaque terminal mobile identifié dans la base de données 4 du serveur de communication. Il en va de même pour un nouveau terminal mobile lorsque ce dernier, défini par son numéro MSISDN, est ajouté dans la base de données du serveur.

La détermination de l'état de connectivité d'un terminal mobile susceptible d'être impliqué par un appel téléphonique reçu par le serveur de communication d'entreprise est alors basée sur le procédé décrit ci-après.

Pour un terminal mobile 5 auquel est attribué par défaut l'état SJ et susceptible d'être impliqué dans le traitement d'un appel téléphonique reçu par le serveur de communication d'entreprise 3, ce dernier exécute une étape 11 d'émission d'un message court de type SMS avec accusé de réception automatique vers le terminal mobile 5.

Le message court transite plus précisément vers le SMSC ("Short Message Service Center") du réseau 1 de téléphonie mobile d'abonnement du terminal mobile 5. Le SMSC va stocker le message puis le transmettre dans une étape 12 à destination du terminal mobile 5 lorsque celui-ci est présent sur le réseau.

Ainsi, si le terminal mobile 5 est sous couverture radio cellulaire, c'est-à-dire s'il est connecté à une station de base du réseau, alors le SMSC de l'opérateur du réseau 1 va exécuter une étape 13 d'émission vers le serveur de communication d'entreprise 3 du message d'accusé de réception Ack_SMS, dès qu'il aura émis le message court d'origine issu du serveur de communication 3 vers le terminal mobile 5 destinataire.

Un paramètre de temporisation T, dont la valeur est fixée préalablement au niveau du serveur de communication d'entreprise 3, doit en outre être considéré conjointement avec le processus mis en oeuvre d'envoi et de réception du message court SMS avec accusé de réception automatique, de sorte à permettre de superviser la réception du message d'accusé de réception au niveau du serveur de communication d'entreprise.

Plus précisément, si le message d'accusé de réception Ack_SMS est reçu par le serveur de communication d'entreprise 3 avant le terme de la temporisation T fixée, le serveur de communication d'entreprise en conclut que le terminal mobile 5 est joignable et peut donc faire passer le terminal mobile 5 dans l'état J et entreprendre des actions en conséquence, telles que par exemple lancer un appel téléphonique vers le terminal mobile 5.

Par contre, si au terme de la temporisation T, le serveur de communication d'entreprise 3 n'a pas reçu le message d'accusé de réception Ack_SMS, il en conclut que le terminal mobile 5 est dans un état injoignable et le fait donc passer dans l'état I. En conséquence, le serveur est conduit à ajuster son comportement sur la base de cette information. Par exemple, dans le cadre du « Dual ring », le serveur de communication d'entreprise alerte uniquement le poste fixe d'entreprise de l'usager qui cherche à être joint par l'appelant A ou encore renvoie l'appel du correspondant A vers une fonction d'automate vocal d'entreprise ou vers une messagerie vocale d'entreprise.

Un autre cas de figure est susceptible de se produire qui se rapporte au cas où l'accusé de réception du message court SMS émis vers le terminal mobile 5 est reçu par le serveur de communication d'entreprise après l'expiration de la temporisation T. Dans ce cas de figure, le serveur de communication d'entreprise considère que le terminal mobile est redevenu joignable et adapte alors son comportement selon qu'une action de traitement d'appel téléphonique concernant potentiellement le terminal mobile est en cours.

Si une action de traitement d'appel téléphonique concernant potentiellement le terminal mobile est effectivement en cours, alors le serveur de communication d'entreprise fait passer le terminal mobile dans l'état J et peut entreprendre des actions immédiates.

Si par contre, il n'existe aucune situation de traitement d'appel téléphonique susceptible de mettre en cause le terminal mobile lorsque l'accusé de réception est reçu par le serveur de communication d'entreprise, alors ce dernier fait passer par prudence le terminal mobile dans l'état SJ.

Autrement dit, dans ce cas de figure, le serveur de communication d'entreprise affecte l'état joignable J au terminal mobile dans la base de données lors de la réception de l'accusé de réception, si et seulement si le logiciel de traitement des appels téléphoniques s'exécutant dans le serveur justifie d'une action de traitement, immédiate ou à très bref délai (typiquement quelques secondes), concernant le terminal mobile.

La temporisation T permettant de superviser la réception de l'accusé de réception au niveau du serveur de communication d'entreprise est avantageusement un paramètre ajustable en fonction de l'opérateur du réseau de téléphonie mobile 1.

Le procédé selon l'invention vise donc aussi à permettre l'attribution au niveau du serveur de communication d'entreprise d'un paramètre de temporisation Ti lié au réseau mobile d'abonnement de chaque terminal mobile dont on cherche à déterminer l'état de connectivité au réseau.

Pour ce faire, selon un premier mode de réalisation, la valeur de temporisation pour un opérateur de réseau de téléphonie mobile donné peut être paramétrée via un dialogue homme-machine accessible au gestionnaire du serveur de communication d'entreprise.

Selon un autre mode de réalisation, le processus d'attribution de la valeur de temporisation pour un opérateur de téléphonie mobile donné peut être automatisé selon le procédé décrit ci-après.

L'identification de l'opérateur du réseau de téléphonie mobile de chaque terminal mobile identifié auprès du serveur de communication d'entreprise étant connue dans la base de données 4 du serveur de communication d'entreprise, ce dernier est à même d'établir une liste des opérateurs pour lesquels il convient de déterminer les valeurs de temporisation à utiliser.

Ainsi, pour chaque opérateur mobile, le serveur de communication d'entreprise 3 sélectionne, par exemple par un tirage pseudo aléatoire, une liste de terminaux mobiles abonnés, identifiés par leur numéro MSISDN. Les terminaux mobiles sélectionnés doivent impérativement se situer dans la zone couverte par le réseau de leur opérateur mobile, c'est-à-dire qu'ils ne doivent pas se trouver en situation de « roaming ».

Pour chaque terminal mobile de la liste, le serveur de communication d'entreprise émet un message court de test (par exemple du type « test en cours, merci de votre compréhension ») avec accusé de réception automatique et mesure le temps de retour de l'accusé de réception.

De préférence, pour être significative, cette opération de test est effectuée à une heure de forte charge du réseau, définie par un paramètre système.

Une fois la campagne de test réalisée, le serveur de communication d'entreprise effectue une analyse statistique des résultats de mesure pour attribuer la valeur de temporisation associée à l'opérateur de téléphonie mobile concerné, qui pourra alors être utilisée pour déterminer l'état de connectivité d'un terminal mobile abonné à ce réseau.

Dans le cas où aucune valeur de temporisation ne peut être attribuée en raison d'un nombre trop important de temps de retour de l'accusé de réception au-delà d'une valeur limite (par exemple 10 secondes), le serveur de communication ne peut pas mettre pas en oeuvre le procédé principal de détermination de l'état de connectivité pour les terminaux mobiles de l'opérateur considéré.

Dans le cadre du processus d'attribution d'une valeur de temporisation pour la mise en oeuvre du procédé principal de l'invention, il est à noter que certains usagers de terminaux mobiles peuvent se trouver occasionnellement en situation de « roaming », dans laquelle l'usager se déplace en dehors de la zone couverte par le réseau de son opérateur mobile et où les appels qu'il émet ou qui lui sont destinés sont acheminés à travers le réseau d'un autre opérateur, avec lequel un accord de « roaming » a été conclu. Cette situation correspond typiquement à un déplacement dans un pays étranger.

Lorsqu'un usager est ainsi en situation de « roaming », le serveur de communication d'entreprise doit attribuer une nouvelle valeur au paramètre de temporisation T associée au couple d'opérateurs respectivement du réseau de téléphonie mobile d'abonnement et du réseau de téléphonie mobile visité, avec lequel un accord de roaming a été passé.

De la même manière que précédemment pour les situations hors cas de « roaming », le mode d'attribution de la valeur du paramètre de temporisation au niveau du serveur de communication d'entreprise peut reposer sur un dialogue homme-machine ou être réalisé automatiquement par une campagne de mesure.

Dans ce dernier cas, lorsque le serveur de communication d'entreprise a connaissance d'une situation de « roaming » (soit par une opération manuelle d'exploitation, soit par un logiciel particulier installé sur le terminal mobile et fournissant automatiquement l'information d'état de « roaming » au serveur via un SMS ou une connexion de données de type Gprs ou 3G), il vérifie au préalable qu'aucune valeur n'a été attribuée au paramètre de temporisation lié au couple d'opérateurs concerné.

Si tel est le cas, le serveur de communication d'entreprise lance une nouvelle campagne de mesure en émettant des messages courts de test avec accusé de réception automatique vers le terminal mobile sélectionné en situation de « roaming », permettant ainsi d'attribuer la valeur de temporisation T au couple d'opérateurs concerné par une analyse statistique des résultats de mesure du temps de retour de l'accusé de réception automatique pour chaque message court de test émis.

Le mode le plus commun de la convergence fixe mobile d'entreprise consiste à l'heure actuelle, comme on l'a vu, à traiter un appel incident sur un numéro d'appel unique (« one number ») identifiant un usager de l'entreprise, en le présentant en quasi simultanéité:
- au terminal fixe, tel que par exemple un poste PABX, et
- au terminal mobile (lancement d'un appel par le serveur de communication d'entreprise).

Sur la base du procédé principal de détermination d'un état de connectivité d'un terminal mobile potentiellement impliqué par le traitement d'un appel téléphonique au niveau du serveur de communication d'entreprise, une variante consiste à inclure dans le message court SMS émis à l'étape 11 depuis le serveur 3 à destination du terminal mobile 5, des informations d'identification de l'appel téléphonique 10 reçu sur le numéro unique d'appel sous lequel l'usager d'entreprise est connu et impliquant potentiellement le terminal mobile 5.

Ces informations d'identification peuvent comprendre par exemple le numéro de téléphone du correspondant A cherchant à joindre l'usager d'entreprise connu sous le numéro unique d'appel, suivant un texte du type : « Appel de + 33 1 60 12 23 55 ».

Une amélioration consiste à rajouter dans le message le nom du correspondant A dans la mesure où le serveur de communication d'entreprise en a la possibilité via un accès à un annuaire d'entreprise.

Ainsi, selon cette variante, l'usager du terminal mobile 5 peut facilement, via une simple manipulation demandant le rappel de l'émetteur du message SMS, lancer un appel à destination du serveur de communication d'entreprise 3.

A la réception de cet appel entrant identifié par le numéro MSISDN du terminal mobile 5, le serveur de communication d'entreprise 3 est à même d'assurer la corrélation de cet appel entrant avec l'appel incident 10 en cours de traitement et a alors toute latitude pour appliquer le traitement d'appel le plus approprié :
- assurer la connexion directe entre le correspondant extérieur et le terminal mobile 5,
- mettre en relation le terminal mobile 5 avec une fonction d'automate vocal de l'entreprise afin de lui proposer de :
   - Prendre l'appel incident,
   - Rediriger l'appel incident vers la messagerie vocale d'entreprise,
   - Rediriger l'appel incident vers le standard téléphonique de l'entreprise ou tout autre groupe fonctionnel de l'entreprise (ex : service commercial, support technique, ...)
- autre...

Toujours sur la base du procédé principal de l'invention, une autre variante concerne le cas où le terminal mobile est adapté, via un logiciel spécifique embarqué dans le terminal, à traiter des messages SMS d'un type particulier émis par le serveur de communication d'entreprise, notamment en ce qu'il est capable de traiter des messages SMS contenant des informations relatives à un appel téléphonique à recevoir juste après l'arrivée du SMS émis par le serveur.

La différence avec le procédé décrit précédemment réside donc dans le traitement du message court SMS émis à l'étape 11 par le serveur de communication d'entreprise à destination d'un terminal mobile du type précité, lorsque le serveur reçoit un appel sur numéro unique d'appel (« One Number ») impliquant ledit mobile.

Selon cette autre variante, en référence à la figure 1, le message court de service SMS (A,P) émis par le serveur de communication d'entreprise 3 à destination du terminal mobile 5 contient d'une part, des informations d'identification de l'appel reçu 10 (exemple : numéro de téléphone et/ou nom du correspondant A) impliquant potentiellement le terminal mobile et, d'autre part, des informations d'identification d'une interface de communication du serveur de communication d'entreprise avec le réseau 1 de téléphonie mobile d'abonnement du terminal mobile, par exemple le numéro MSISDN du port GSM P du serveur de communication d'entreprise sur lequel va être émis en séquence l'appel téléphonique 10 à destination du terminal mobile 5.

Le serveur 3 entreprend en effet dans une étape 14, d'émettre sur son port GSM P l'appel téléphonique 10 impliquant le terminal mobile 5 à destination ce dernier, dès la réception de l'accusé de réception automatique Ack_SMS du message court SMS(A,P) par le serveur de communication d'entreprise ou alors après l'expiration d'une seconde temporisation Ta d'une valeur inférieure à celle de la première temporisation T.

Le serveur de communication d'entreprise annule la tentative d'appel GSM à destination du terminal mobile s'il n'a pas reçu l'accusé de réception à l'expiration de la temporisation T, signifiant que le terminal mobile est injoignable.

Côté terminal mobile, à la réception du message court SMS(A,P), une temporisation Tv est déclenchée sous la commande du logiciel embarqué et le message reçu est conservé jusqu'à l'arrivée d'un appel incident provenant du numéro MSISDN du port GSM P du serveur de communication d'entreprise, indiqué dans le corps du message SMS(A,P) reçu.

Le terminal mobile entreprend alors les actions suivantes en fonction de la situation :
- l'appel téléphonique émis sur le port GSM P du serveur de communication d'entreprise à destination du terminal mobile est reçu par le terminal mobile avant l'expiration de la temporisation Tv et sans qu'aucun autre appel ne se soit présenté sur le terminal mobile. Dans cette situation le logiciel embarqué récupère les informations d'identification de l'appel téléphonique contenues dans le message court reçu SMS(A,P) (numéro et/ou nom du correspondant) et les présente à l'usager sur l'écran du terminal mobile.
- La temporisation Tv expire sans qu'aucun appel issu du port GSM P du serveur de communication d'entreprise ne soit reçu par le terminal mobile. Dans cette situation, le terminal mobile ne tient plus compte du message SMS(A,P) reçu. En option, il peut notifier (via un SMS ou une connexion Gprs/3G) le serveur de communication d'entreprise de la non réception de l'appel téléphonique attendu consécutivement à la réception du message du message SMS (A, P) .
- Un appel téléphonique non issu du port GSM P du serveur de communication d'entreprise arrive sur le terminal mobile avant l'expiration de la temporisation Tv ou avant l'arrivée de l'appel téléphonique issu du port GSM P du serveur de communication d'entreprise. Cette situation correspond à un conflit d'appel avec une communication d'origine privée arrivant directement sur le terminal mobile sans passer par le serveur de communication d'entreprise. Le terminal mobile annule alors la temporisation Tv et ne tient plus compte du message SMS(A,P) reçu. En option, de la même manière que précédemment, il peut notifier (via un SMS ou une connexion Gprs/3G) le serveur de communication d'entreprise de la situation de conflit.

## Revendications

1. Procédé de détermination d'un état de connectivité d'au moins un terminal mobile (5) abonné à au moins un réseau de téléphonie mobile (1) par un serveur de communication (3) auprès duquel le terminal mobile et son réseau d'abonnement sont identifiés, **caractérisé en ce qu'**il comprend :
- l'émission (11) d'un message court SMS (SMS(A,P)) avec accusé de réception automatique depuis le serveur de communication vers le terminal mobile, et
- la détermination de l'état de connectivité du terminal mobile (5) au réseau par le serveur de communication, en fonction de la réception ou non de l'accusé de réception automatique (Ack_SMS) du message court SMS par le serveur de communication au terme d'une première temporisation (T) de valeur paramétrable au niveau du serveur de communication, et **en ce que** chaque terminal mobile (5) est identifié auprès du serveur de communication (3) par un numéro unique d'appel, auquel le serveur de communication associe au moins le terminal mobile et un poste téléphonique privé.

2. Procédé selon la revendication 1, **caractérisé en ce que** l'état de connectivité déterminé par le serveur de communication (3) est adapté à prendre l'un des états suivants : - joignable si le message d'accusé de réception (Ack_SMS) est reçu avant le terme de la première temporisation (T), - non joignable si le message d'accusé de réception (Ack_SMS) n'est pas reçu avant le terme de la première temporisation (T),supposé joignable, si le message d'accusé de réception (Ack_SMS) est reçu après le terme de la première temporisation (T) et qu'aucune action de traitement d'appel téléphonique concernant le terminal mobile (5) n'est mise en oeuvre par le serveur de communication (3).

3. Procédé selon la revendication 1 ou 2, **caractérisé en ce que** la valeur de la première temporisation (T) paramétrée au niveau du serveur de communication (3) est liée à l'opérateur du réseau de téléphonie mobile d'abonnement (1) du terminal mobile (5) identifié auprès du serveur de communication.

4. Procédé selon la revendication 3, **caractérisé en ce que** la valeur de la première temporisation (T) est attribuée automatiquement par le serveur de communication (3) pour chaque opérateur de téléphonie mobile identifié auprès de lui selon les étapes suivantes consistant à :
- sélectionner une liste de terminaux mobiles identifiés auprès du serveur de communication, abonnés dudit opérateur de téléphonie mobile,
- émettre un message court de test avec accusé de réception automatique depuis le serveur de communication vers chaque terminal mobile de la liste,
- mesurer le temps de retour de l'accusé de réception automatique pour chaque message court de test émis,
- attribuer la valeur de la première temporisation (T) pour ledit opérateur de téléphonie mobile en fonction d'une analyse statistique des résultats de mesure.

5. Procédé selon la revendication 3, **caractérisé en ce que** la valeur de la première temporisation (T) est liée en outre à un second opérateur de réseau téléphonie mobile, dit réseau de téléphonie mobile visité, adapté à acheminer des appels vers le terminal mobile (5) lorsque ce dernier se déplace en dehors de la zone couverte par son réseau de téléphonie mobile d'abonnement (1).

6. Procédé selon la revendication 5, **caractérisé en ce que** la valeur de la première temporisation (T) est attribuée automatiquement par le serveur de communication (3) pour chaque couple d'opérateurs respectivement de réseau de téléphonie mobile d'abonnement et de réseau de téléphonie mobile visité, selon les étapes suivantes consistant à :
- sélectionner au moins un terminal mobile identifié auprès du serveur de communication utilisant le réseau de téléphonie mobile visité,
- émettre une pluralité de messages courts de test avec accusé de réception automatique depuis le serveur de communication vers le terminal mobile sélectionné,
- mesurer le temps de retour de l'accusé de réception automatique pour chaque message court de test émis,
- attribuer la valeur de la première temporisation (T) pour ledit couple d'opérateurs de téléphonie mobile en fonction d'une analyse statistique des résultats de mesure.

7. Procédé selon l'une quelconque des revendications précédentes, **caractérisé en ce que** le message court SMS (SMS(A,P)) avec accusé de réception automatique émis depuis le serveur de communication (3) vers le terminal mobile comprend des informations d'identification d'un appel téléphonique (10) reçu par le serveur de communication (3) impliquant le terminal mobile (5).

8. Procédé selon la revendication 7, **caractérisé en que** le message court SMS (SMS(A,P)) avec accusé de réception automatique émis depuis le serveur de communication (3) vers le terminal mobile (5) comprend des informations d'identification d'une interface de communication (P) du serveur de communication avec le réseau de téléphonie mobile d'abonnement (1) du terminal mobile.

9. Procédé selon la revendication 8, **caractérisé en ce qu'**il comprend l'émission (14) de l'appel téléphonique (10) reçu impliquant le terminal mobile (5) sur l'interface de communication (P) du serveur de communication (3) à destination du terminal mobile (5) dès réception de l'accusé de réception automatique (Ack_SMS) du message court SMS par le serveur de communication ou après l'expiration d'une seconde temporisation (Ta) d'une valeur inférieure à celle de la première temporisation (T).

10. Procédé selon l'une quelconque des revendications 7 à 9, **caractérisé en ce que** les informations d'identification de l'appel téléphonique (10) reçu par le serveur de communication impliquant le terminal mobile comprennent un numéro de téléphone et/ou un nom.

11. Serveur de communication, **caractérisé en ce qu'**il est adapté à la mise en oeuvre du procédé selon l'une quelconque des revendications 1 à 10.

12. Serveur de communication selon la revendication 11, **caractérisé en ce qu'**il comprend un équipement de commutation de type PABX, IP-PABX ou centrex.

13. Serveur de communication selon la revendication 11 ou 12, **caractérisé en ce qu'**il comprend une passerelle de communication multi-réseaux.
